# EUROPEAN PATENT APPLICATION

(11) **EP 4 395 001 A1**
(43) Date of publication of application: **03.07.2024**
(21) Application number: 22913910.0
(22) Date of filing: 22.11.2022
(51) Int. Cl.: H01M 10/48

(54) **VOLTAGE ACQUISITION STRUCTURE, AND BATTERY MODULE HAVING VOLTAGE ACQUISITION STRUCTURE**

(30) Priority: 27.12.2021 CN 202123317998 U
(71) Applicant: BYD Company Limited, Shenzhen, Guangdong 518118 (CN)
(72) Inventor: YIN, Jiwei, Shenzhen, Guangdong 518118 (CN); ZENG, Erping, Shenzhen, Guangdong 518118 (CN); ZHENG, Weixin, Shenzhen, Guangdong 518118 (CN)
(74) Representative: Arnold & Siedsma
(86) International application number: PCT/CN2022/133368
(87) International publication number: WO 2023/124652

(57) **Abstract**

The present disclosure provides a voltage collection structure and a battery module having the voltage collection structure. The voltage collection structure includes: a fixed holder that is configured to be connected to multiple battery cores; a circuit board that is installed on the fixed holder; multiple voltage collection sheets that are installed on the circuit board and connected to the multiple battery cores. At least one voltage collection sheet includes a buffer segment, and at least a portion of the buffer segment protrudes in a direction that faces away from the battery core, so that the voltage collection sheet has a displacement allowance in a direction that is close to the battery core. A maximum protruding distance of the buffer segment ranges from 0.5 mm to 20 mm. The voltage collection structure according to the embodiments of the present disclosure can absorb a height difference between multiple battery cores, and the attachment tightness between the voltage collection sheet and each battery core is improved, so that reliable voltage collection of the battery core can be implemented.

## Description

### CROSS-REFERENCE TO RELATED APPLICATIONS

The present disclosure claims priority to Chinese Patent Application No. 202123317998.2, filed on December 27, 2021 and entitled "VOLTAGE COLLECTION STRUCTURE AND BATTERY MODULE HAVING VOLTAGE COLLECTION STRUCTURE", which is incorporated herein by reference in its entirety.

### FIELD

The present disclosure relates to the field of battery technologies, and more specifically, to a voltage collection structure and a battery module having the voltage collection structure.

### BACKGROUND

With an increasing number of electric vehicles, a safety issue of a power battery is increasingly concerned. A battery module usually includes a collection structure that collects a voltage of a battery core. The collection structure usually includes a collector having a collection nickel sheet. The collection nickel sheet is connected to a positive electrode and a negative electrode of each battery core, and is configured to collect a voltage of a battery core in the battery module, to detect whether the power battery is safe.

Due to a manufacturing tolerance of the battery core itself and an assembly tolerance generated after battery cores are stacked, a gap exists between the collection nickel sheet and the battery core. As a result, the collection nickel sheet cannot be attached to the battery core effectively. The battery core and the collection nickel sheet are generally fixed by laser welding, and the laser welding requires a gap between welded workpieces to be kept within 0.5 m. When the gap between the welded workpieces is greater than 0.5 m, it causes poor welding, such as an explosion, false welding, and the like.

In the related art, due to an unreasonable structure of the collection nickel sheet, when a tool is used to compress the collection nickel sheet during welding, the collection nickel sheet cannot provide an effective buffer space, resulting in a minimal deformation allowance for the collection nickel sheet. When a height difference exists between battery cores after the battery cores are stacked, because the collection nickel sheet has no deformation allowance when being compressed downwards by the tool during welding, the collection nickel sheet cannot absorb the height difference, resulting in a high defect rate of the battery module during assembly and welding, and further affecting the reliability of voltage collection of the battery module.

### SUMMARY

According to the embodiments of a first aspect of the present disclosure, a voltage collection structure is provided, including: a fixed holder, where the fixed holder is configured to be connected to multiple battery cores; a circuit board, where the circuit board is installed on a side of the fixed holder that is away from the multiple battery cores; and multiple voltage collection sheets, where the multiple voltage collection sheets are installed on the circuit board and connected to the multiple battery cores. The voltage collection sheet includes a buffer segment, and at least a portion of the buffer segment protrudes in a direction that faces away from the battery core, so that the voltage collection sheet has a displacement allowance in a direction that is close to the battery core. A maximum protruding distance of the buffer segment ranges from 0.5 mm to 20 mm.

According to some embodiments of the present disclosure, a dimension of the at least portion of the buffer segment in a width direction of the voltage collection sheet ranges from 2 mm to 20 mm, and a dimension in an extension direction of the voltage collection sheet ranges from 0.5 mm to 20 mm.

According to some embodiments of the present disclosure, the voltage collection sheet further includes: a circuit board connection segment, where the circuit board connection segment is connected to the circuit board and an end of the buffer segment; and a battery core connection segment, where the battery core connection segment is configured to be connected to the battery core and another end of the buffer segment. The battery core connection segment and the circuit board connection segment are parallel and located in different planes. A portion of the buffer segment is located on a side of the circuit board connection segment that faces away from the battery core connection segment in a thickness direction of the voltage collection sheet, so that the battery core connection segment has a displacement allowance in the direction that is close to the battery core. A maximum distance between the portion of the buffer segment and the circuit board connection segment in the thickness direction of the voltage collection sheet ranges from 0.5 mm to 20 mm.

According to some embodiments of the present disclosure, the buffer segment includes: a first subsegment, where a first end of the first subsegment is connected to an end of the circuit board connection segment that is adjacent to the battery core connection segment, and the first subsegment extends in a direction that is away from the battery core connection segment in a thickness direction of the circuit board connection segment; a second subsegment, where a first end of the second subsegment is connected to an end of the battery core connection segment that is adjacent to the circuit board connection segment, and the second subsegment extends in a direction that is close to the circuit board connection segment in a thickness direction of the battery core connection segment; and a third subsegment, where two ends of the third subsegment are connected to another end of the first subsegment and another end of the second subsegment respectively.

According to some embodiments of the present disclosure, the first subsegment and the second subsegment are parallel and perpendicular to the third subsegment, and the third subsegment, the battery core connection segment, and the circuit board connection segment are parallel.

According to some embodiments of the present disclosure, the third subsegment is bent and connected to the first subsegment and the second subsegment respectively.

According to some embodiments of the present disclosure, a first buckle and a second buckle are arranged on a side of the fixed holder that faces away from the battery core, and the first buckle is configured to be clamped onto a side of the circuit board that faces away from the battery core. Multiple through holes are provided on the fixed holder along a thickness direction thereof. Poles of the multiple battery cores are respectively inserted into the multiple through holes, and a portion of each pole that passes through the through hole is clamped by the second buckle.

According to the embodiments of a second aspect of the present disclosure, a battery module is provided, including multiple battery cores and the voltage collection structure described in the embodiments of the first aspect of the present disclosure.

According to some embodiments of the present disclosure, each battery core includes a conductive housing and a battery core body that is arranged in the conductive housing. The battery core has a first end and second end that are opposite to each other. The battery core body has a first end pole that is arranged on the first end and a second end pole that is arranged on the second end, and the first end pole is connected to the conductive housing. The voltage collection structure is arranged on the second end. A part of the multiple voltage collection sheets are connected to the second end poles, and another part of the multiple voltage collection sheets are connected to the conductive housings.

According to some embodiments of the present disclosure, the battery module further includes: at least one first connection sheet, each first connection sheet connecting first end poles of two adjacent battery cores, where the multiple battery cores are arranged along a thickness direction of the battery cores, and polarities of first end poles of adjacent battery cores are opposite and polarities of second end poles are opposite; and at least one second connection sheet, each second connection sheet connecting second end poles of two adjacent battery cores, and the multiple battery cores being connected in series through the at least one first connection sheet and the at least one second connection sheet, where the second connection sheet is located between the fixed holder and the circuit board, and the part of the multiple voltage collection sheets are connected to the second end poles through the second connection sheet.

According to some embodiments of the present disclosure, multiple positioning grooves are provided on a side of the fixed holder that faces away from the battery core, the second end pole passes through the positioning groove, and a portion of the second connection sheet is located in the positioning groove and connected to the second end pole.

Additional aspects and advantages of the present disclosure will be provided in the following description, some of which will be apparent from the following description, or may be learned by practice from the present disclosure.

### BRIEF DESCRIPTION OF THE DRAWINGS

The foregoing and/or additional aspects and advantages of the present disclosure will become apparent and comprehensible in the description of the embodiments made with reference to the following accompanying drawings. In the accompanying drawings:
FIG. 1 is a schematic structural diagram of a battery module according to an embodiment of the present disclosure;
FIG. 2 is a partial schematic diagram of a battery module according to an embodiment of the present disclosure;
FIG. 3 is a partial exploded view of a battery module according to an embodiment of the present disclosure;
FIG. 4 is a schematic diagram of connection between a voltage collection sheet and a battery core according to an embodiment of the present disclosure;
FIG. 5 is a schematic structural diagram of a voltage collection sheet according to an embodiment of the present disclosure;
FIG. 6 is a schematic structural diagram of a voltage collection sheet from another perspective according to an embodiment of the present disclosure; and
FIG. 7 is a schematic circuit diagram of a battery module according to an embodiment of the present disclosure.

### Reference numerals:

1-Voltage collection structure, 2-Battery core, 3-Battery module, 100-Fixed holder, 110-First buckle, 120-Second buckle, 130-Through hole, 140-Third buckle, 200-Circuit board, 300-Voltage collection sheet, 310-Buffer segment, 311-First subsegment, 311a-First end of the first subsegment, 311b-Second end of the first subsegment, 312-Second subsegment, 312a-First end of the second subsegment, 312b-Second end of the second subsegment, 313-Third subsegment, 320-Circuit board connection segment, 330-Battery core connection segment, 400-Conductive housing, 411-First end pole, 412-Second end pole, 420-First connection sheet, 430-Second connection sheet, 440-Positioning groove, and 500-Battery core body.

### DETAILED DESCRIPTION

Embodiments of the present disclosure are described in detail below, and the embodiments described with reference to the accompanying drawings are exemplary.

In the description of the present disclosure, it should be understood that orientation or position relationships indicated by the terms such as "center", "longitudinal", "transverse", "length", "width", "thickness", "on", "below", "front", "rear", "left", "right", "vertical", "horizontal", "top", "bottom", "inside", "outside", "clockwise", "counterclockwise", "axial direction", "radial direction", and "circumferential direction" are based on orientation or position relationships shown in the accompanying drawings, and are used only for ease and brevity of illustration and description of the present disclosure, rather than indicating or implying that the mentioned apparatus or component needs to have a particular orientation or needs to be constructed and operated in a particular orientation. Therefore, such terms should not be construed as a limitation to the present disclosure.

In the description of the present disclosure, "multiple" means two or more.

In the present disclosure, unless expressly stated and defined otherwise, the term "connection" should be understood in a broad sense. For example, the connection may be a fixed connection, a detachable connection or an integral connection; or may be a mechanical connection or an electrical connection; or may be a direct connection, an indirect connection through an intermediary, or communication between two elements or an interactive relationship between two elements. A person ordinary skill in the art may understand specific meanings of the foregoing terms in the present disclosure according to specific situations.

The present disclosure aims to resolve at least one of the technical problems existing in the related art. Therefore, the present disclosure provides a voltage collection structure. The voltage collection structure can absorb a height difference between battery cores, and the attachment tightness between a voltage collection sheet and each battery core is improved, so that reliable voltage collection of the battery core can be implemented. The present disclosure further provides a battery module having the voltage collection structure.

The following describes a voltage collection structure 1 according to the embodiments of the present disclosure with reference to the accompanying drawings.

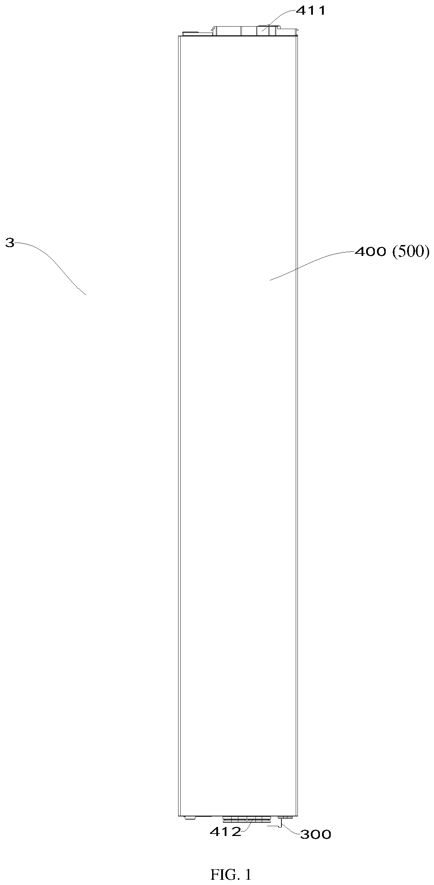

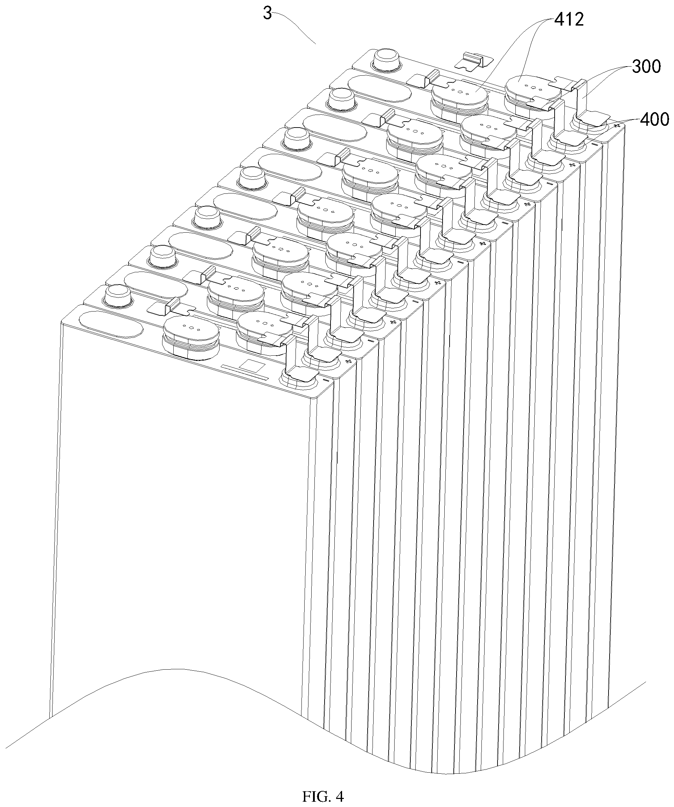

As shown in FIG. 1 to FIG. 6, the voltage collection structure 1 includes a fixed holder 100, a circuit board 200, and multiple voltage collection sheets 300.

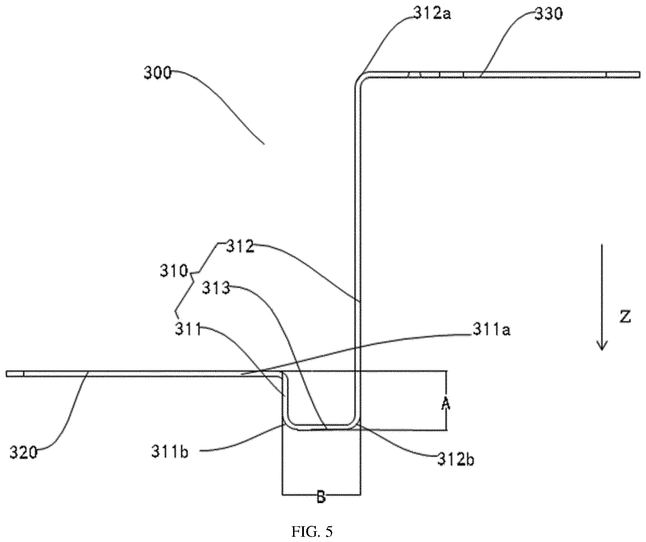

The fixed holder 100 is configured to be connected to multiple battery cores 2. The circuit board 200 is installed on the fixed holder 100. The multiple voltage collection sheets 300 are installed on the circuit board 200 and connected to the multiple battery cores 2. At least one voltage collection sheet 300 includes a buffer segment 310, and at least a portion of the buffer segment 310 protrudes in a direction that faces away from the battery core 2 (that is, a direction Z shown in FIG. 5), so that the voltage collection sheet 300 has a displacement allowance in a direction that is close to the battery core 2. A maximum protruding distance of the buffer segment 310 ranges from 0.5 mm to 20 mm.

It should be noted that the fixed holder 100 may be an insulating member, for example, made of insulating plastic.

For example, the voltage collection sheet 300 and the circuit board 200 may be welded, and the voltage collection sheet 300 and the battery core 2 may be welded.

In the voltage collection structure 1 according to the embodiments of the present disclosure, the fixed holder 100 is connected to the multiple battery cores 2, and the circuit board 200 is installed on a side of the fixed holder 100 that is away from the multiple battery cores 2, so that the fixed holder 100 can fix a relative position between the circuit board 200 and the multiple battery cores 2, and avoid contact between the circuit board 200 and the multiple battery cores 2, thereby avoiding a fault such as a short circuit between the circuit board 200 and the multiple battery cores 2.

In addition, the multiple voltage collection sheets 300 are installed on the circuit board 200 and connected to the multiple battery cores 2. The voltage collection sheet 300 may be made of metallic nickel or nickel alloy. Each voltage collection sheet 300 collects one of a positive voltage and a negative voltage of a battery core 2 that is connected to the voltage collection sheet. Each battery core 2 may be connected to two voltage collection sheets 300, where the two voltage collection sheets 300 collect the positive voltage and the negative voltage of the battery core 2 respectively, to obtain a voltage of the battery core 2.

In addition, at least one voltage collection sheet 300 includes a buffer segment 310, and at least a portion of the buffer segment 310 protrudes in a direction that faces away from the battery core 2, so that the voltage collection sheet 300 has a displacement allowance in the direction that is close to the battery core 2. It should be noted that, each voltage collection sheet 300 has the buffer segment 310 during initial manufacturing. When the voltage collection structure 1 is connected to the multiple battery cores 2, buffer segments 310 of a part of the voltage collection sheets 300 may be compressed by an assembly tool (the tool is an abbreviation of a process tool, and an assembly tool refers to an auxiliary device applied to an assembly process of components) to absorb a height difference between the multiple battery cores 2. Therefore, after assembly, the buffer segments 310 of the part of voltage collection sheets 300 may lose a buffering effect. That is, the buffer segment 310 does not protrude out of the voltage collection sheet 300 in a direction that faces away from the battery core 2.

A maximum protruding distance A of the buffer segment 310 ranges from 0.5 mm to 20 mm. In this way, when a maximum height difference between the multiple battery cores 2 is less than 10 mm, that is, when a height difference between any two of the battery cores 2 is less than 10 mm, under an action force of the assembly tool, the buffer segment 310 can be deformed to effectively absorb the height difference between the battery cores 2. In other words, the voltage collection sheet 300 is tightly attached to the battery core 2 to improve a yield of a battery module 3, making voltage collection of the multiple battery cores 2 more reliable.

In this way, the voltage collection structure 1 according to the embodiments of the present disclosure can absorb the height difference between the battery cores 2, and the attachment tightness of the voltage collection sheet 300 and the battery core 2 is improved, so that reliable voltage collection of the battery core 2 can be implemented.

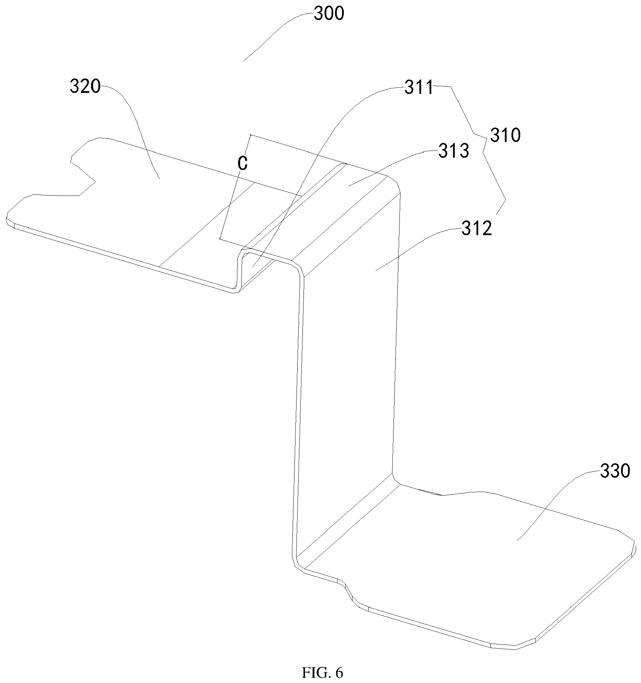

According to some specific embodiments of the present disclosure, as shown in FIG. 5 and FIG. 6, the voltage collection sheet 300 further includes a circuit board connection segment 320 and a battery core connection segment 330.

The circuit board connection segment 320 is connected to the circuit board 200 and an end (that is, a first end 311a of a first subsegment 311) of the buffer segment 310, and the battery core connection segment 330 is connected to the battery core 2 and another end (that is, a first end 312a of a second subsegment 312) of the buffer segment 310. The battery core connection segment 330 and the circuit board connection segment 320 are parallel and located in different planes. A portion of the buffer segment 310 is located on a side of the circuit board connection segment 320 that faces away from the battery core connection segment 330 in a thickness direction (that is, the direction Z shown in FIG. 5) of the voltage collection sheet 300, so that the battery core connection segment 330 has a displacement allowance in the direction that is close to the battery core 2. A maximum distance A between the portion of the buffer segment 310 and the circuit board connection segment 320 in the thickness direction of the voltage collection sheet 300 ranges from 0.5 mm to 20 mm.

For example, the circuit board connection segment 320 may be connected to a side of the circuit board 200 that faces the fixed holder 100. A side surface of the buffer segment 310 that is away from the battery core 2 is flush with a side surface of the circuit board 200 that faces away from the fixed holder 100. The buffer segment 310 is attached to an outer peripheral surface of the circuit board 200, so that a relative position between the circuit board 200 and the voltage collection sheet 300 becomes more stable. In addition, a connection area between the circuit board connection segment 320 and the circuit board 200 is larger, and a connection area between the battery core connection segment 330 and the battery core 2 is larger, which is beneficial for welding.

In addition, the buffer segment 310 may pass through the fixed holder 100 along a thickness direction of the fixed holder 100 to be connected to the battery core connection segment 330. In this way, the voltage collection sheet 300 presents a shape similar to "n". Because the foregoing portion (for example, a third subsegment 313 shown in FIG. 6) of the buffer segment 310 is farthest away from the battery core 2 in the thickness direction of the voltage collection sheet 300, when the assembly tool moves towards the direction that is close to the battery core 2, the assembly tool first comes in contact with the buffer segment 310, so that the buffer segment 310 is deformed earlier than the circuit board connection segment 320. Therefore, while the attachment tightness between the battery core connection segment 330 and the battery core 2 is ensured, detachment between the circuit board connection segment 320 and the circuit board 200 can be avoided. In addition, it should be noted that, in the present disclosure, thickness directions of the fixed holder 100, the circuit board 200, and the voltage collection sheet 300 are consistent, for example, the direction Z shown in FIG. 5, or a direction that is opposite to the direction Z.

Further, a dimension C of the portion of the buffer segment 310 in a width direction of the voltage collection sheet 300 ranges from 2 mm to 20 mm. In this way, a sufficiently high structure strength of the buffer segment 310 may be ensured, and a width of the voltage collection sheet 300 may be prevented from being excessively large and occupying too much space, which is beneficial for reducing a volume of the voltage collection structure 1. In addition, a dimension B of the portion of the buffer segment 310 in an extension direction of the voltage collection sheet 300 ranges from 0.5 mm to 20 mm. In this way, a deformation dimension of the buffer segment 310 is sufficient. This can ensure that after the buffer segment 310 is deformed, the voltage collection sheet 300 is effectively attached to the battery core 2. It should be noted that, in the present disclosure, the thickness direction of the voltage collection sheet 300, the width direction of the voltage collection sheet 300, and the extension direction of the voltage collection sheet 300 are perpendicular to each other in space. For example, "the thickness direction of the voltage collection sheet 300" is a Z-axis direction of a spatial coordinate system, "the width direction of the voltage collection sheet 300" is a Y-axis direction of the spatial coordinate system, and "the extension direction of the voltage collection sheet 300" are an X-axis direction of the spatial coordinate direction.

In some embodiments of the present disclosure, as shown in FIG. 5 and FIG. 6, the buffer segment 310 includes the first subsegment 311, the second subsegment 312, and the third subsegment 313.

The first end 311a of the first subsegment 311 is connected to an end of the circuit board connection segment 320 that is adjacent to the battery core connection segments 330, and the first subsegment 311 extends in a direction that is away from the battery core connection segment 330 in a thickness direction of the circuit board connection segment 320. The first end 312a of the second subsegment 312 is connected to an end of the battery core connection segment 330 that is adjacent to the circuit board connection segment 320, and the second subsegment 312 extends in a direction towards the circuit board connection segment 320 in a thickness direction of the battery core connection segment 330 to a side of the circuit board connection segment 320 that faces away from the battery core connection segment 330. Two ends of the third subsegment 313 are respectively connected to a second end 311b of the first subsegment 311 and a second end 312b of the second subsegment 312. It should be noted that, in the present disclosure, the thickness direction of the circuit board connection segment 320, the thickness direction of the battery core connection segment 330, and the thickness direction of the voltage collection sheet 300 are consistent.

In the present disclosure, that at least a portion of the buffer segment 310 protrudes in a direction that faces away from the battery core 2 may be: a portion of the buffer segment 310 protrudes in the direction that faces away from the battery core 2, or the whole buffer segment 310 protrudes in the direction that faces away from the battery core 2, to form a protrusion. For example, a portion (that is, the third subsegment 313) of the buffer segment 310 protrudes in the direction that faces away from the battery core 2. The first subsegment 311 and the circuit board connection segment 320 may be in arc-shaped transition, and the second subsegment 312 and the battery core connection segment 330 may be in arc-shaped transition. These two arc-shaped transitions may be respectively located at the first subsegment 311 and the second subsegment 312. In the present disclosure, a location of the arc-shaped transition is not limited, provided that a protrusion can be formed to allow the voltage collection sheet 300 to have a displacement allowance in the direction that is close to the battery core 2. The two ends of the third subsegment 313 may be in arc-shaped transition with the first subsegment 311 and the second subsegment 312 respectively. In other words, the third subsegment 313 is bent and connected to the first subsegment 311 and the second subsegment 312 respectively. In this way, stress concentration in the buffer segment 310 itself and between the buffer segment 310 and the circuit board connection segment 320 as well as the battery core connection segment 330 can be avoided, and stress distribution is more even.

In this way, a connection between the buffer segment 310 and the circuit board connection segment 320 as well as the battery core connection segment 330 can be ensured, and the buffer segment 310 is formed by three segments, so that an acute angle in the buffer segment 310 itself and junctions of the buffer segment 310 and the circuit board connection segment 320 as well as the battery core connection segment 330 can be avoided, and a structure of the voltage collection sheet 300 becomes more reliable.

Optionally, the third subsegment 313, the battery core connection segment 330, and the circuit board connection segment 320 are parallel. In this way, when the assembly tool compresses the buffer segment 310 downwards, the assembly tool first comes in contact with the third subsegment 313. In that case, the assembly tool is in surface contact with the third subsegment 313, a contact area is larger, thereby preventing the buffer segment 310 from being damaged due to excessively large local pressure on the buffer segment 310. In addition, the first subsegment 311 and the second subsegment 312 are parallel to each other, and the first subsegment 311 and the second subsegment 312 are both perpendicular to the third subsegment 313. This can avoid occurrence of an acute angle at a transition of the buffer segment 310 and also help reduce a dimension of the voltage collection sheet 300 in the extension direction thereof, thereby facilitating installation of the voltage collection structure 1.

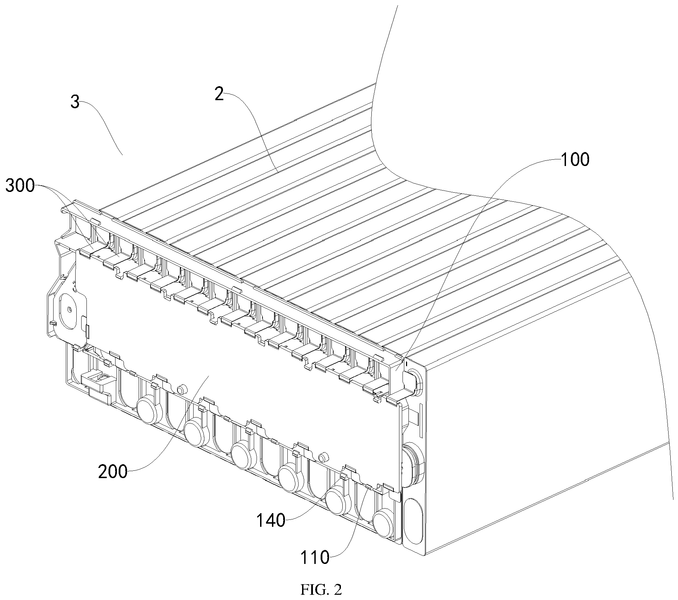

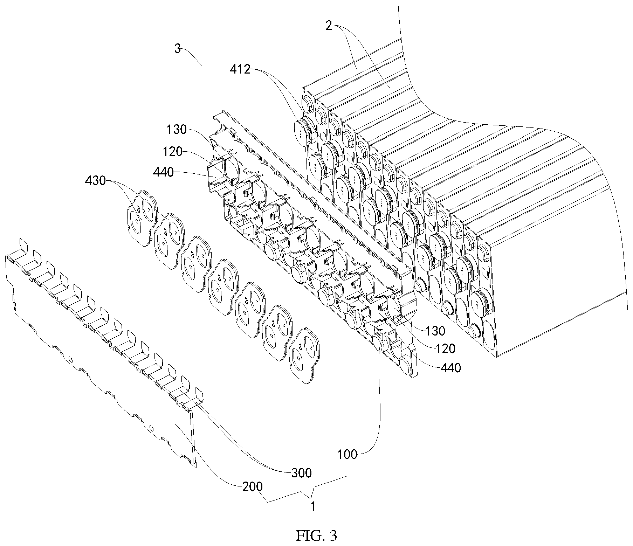

According to some specific embodiments of the present disclosure, as shown in FIG. 2 and FIG. 3, a first buckle 110 and a second buckle 120 are arranged on a side of the fixed holder 100 that faces away from the battery core 2. The first buckle 110 is configured to be clamped onto a side of the circuit board 200 that faces away from the battery core 2. Multiple through holes 130 are provided on the fixed holder 100 along a thickness direction thereof. Poles of the multiple battery cores 2 are respectively inserted into the multiple through holes 130 (for example, a first end pole 411 or a second end pole 412 of a battery core body 500 is inserted into a corresponding through hole 130), and an outer peripheral surface of a portion of each pole that passes through the through hole 130 is clamped by the second buckle 120.

In this way, the fixed holder 100 is fixed to the circuit board 200 and the battery core 2 respectively in a clamping manner. This facilitates disassembly and assembly between the circuit board 200 and the fixed holder 100, as well as disassembly and assembly between the fixed holder 100 and the battery core 2. In addition, the first buckle 110 and the second buckle 120 may be made of a rubber material. That is, the first buckle 110 and the second buckle 120 have elasticity. The first buckle 110 and the second buckle 120 can undergo elastic deformation, further improving the convenience of disassembly and assembly.

The following describes a battery module 3 (for example, a power battery) according to the embodiments of the present disclosure with reference to the accompanying drawings. As shown in FIG. 1 to FIG. 4, the battery module 3 includes multiple battery cores 2 and the voltage collection structure 1 according to the foregoing embodiments of the present disclosure.

The battery module 3 according to the embodiments of the present disclosure has advantages such as reliable voltage collection by utilizing the voltage collection structure 1 according to the foregoing embodiments of the present disclosure.

According to some specific embodiments of the present disclosure, as shown in FIG. 1 to FIG. 4, each battery core 2 includes a conductive housing 400 and a battery core body 500 that is arranged in the conductive housing 400. The battery core 2 has a first end and second end that are opposite to each other. The battery core body has a first end pole 411 that is arranged on the first end and a second end pole 412 that is arranged on the second end, and the first end pole 411 is connected to the conductive housing 400. When the first end pole 411 of the battery core body is a negative pole, the second end pole 412 is a positive pole; and on the contrary, when the first end pole 411 of the battery core body is a positive pole, the second end pole 412 is a negative pole. In addition, the voltage collection structure 1 is arranged on the second end, a part of the multiple voltage collection sheets 300 are connected to the second end poles 412, and another part of the multiple voltage collection sheets 300 are connected to the conductive housings 400.

In this way, a positive voltage and a negative voltage of battery core 2 can be collected simultaneously by only installing the voltage collection structure 1 on a side of the battery core 2. A structure of the battery module 3 is simpler, and the multiple voltage collection sheets 300 may be arranged on two opposite sides of circuit board 200. For example, the multiple voltage collection sheets 300 are arranged on two sides of a width direction of circuit board 200. The voltage collection sheets 300 on one side of the two sides of the width direction of circuit board 200 are connected to the second end poles 412, and the voltage collection sheets 300 on the other side of the two sides of the width direction of circuit board 200 are connected to the conductive housings 400, making voltage collection more accurate.

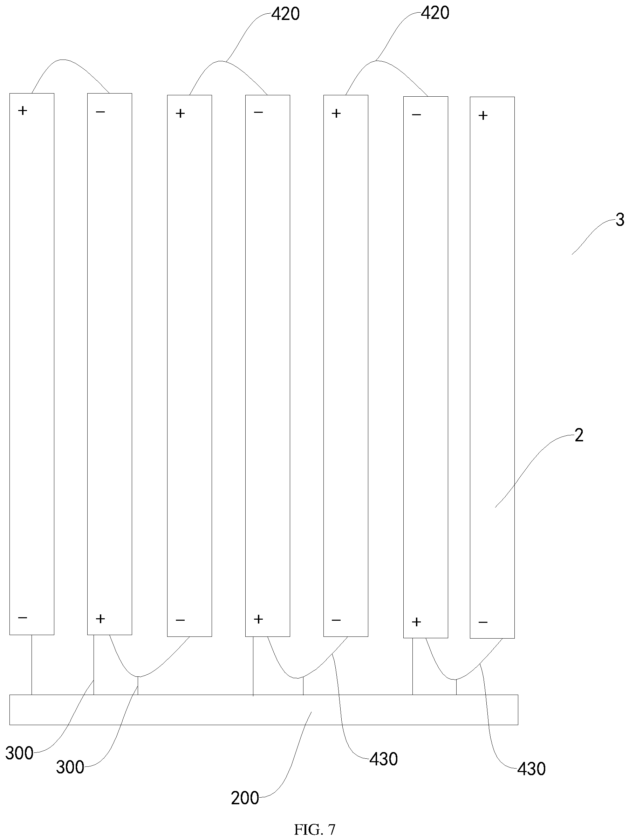

Further, as shown in FIG. 3 and FIG. 7, the battery module 3 further includes a first connection sheet 420 and a second connection sheet 430.

The multiple battery cores 2 are arranged along a thickness direction of the battery cores 2, and polarities of first end poles 411 of adjacent battery cores 2 are opposite and polarities of second end poles 412 thereof are opposite. Each first connection sheet 420 connects first end poles 411 of adjacent battery cores 2, and each second connection sheets 430 connects second end poles 412 of adjacent battery cores 2, so that the multiple battery cores 2 are connected in series. The second connection sheet 430 is located between the fixed holder 100 and the circuit board 200, and a part of the multiple voltage collection sheets 300 are connected to the second end poles 412 through the second connection sheet 430.

For example, a third buckle 140 is arranged on a side of the fixed holder 100 that faces away from the battery core 2, where the third buckle 140 is configured to be clamped to the second connection sheet 430, and the second connection sheet 430 may be located between the fixed holder 100 of the circuit board 200.

In this way, a voltage of each battery core 2 can be detected through the voltage collection structure 1. This is beneficial for ensuring reliable operation of the multiple battery cores 2, thereby ensuring reliable operation of the battery module 3.

Optionally, as shown in FIG. 3, multiple positioning grooves 440 are provided on the side of the fixed holder 100 that faces away from the battery core 2. The second end pole 412 passes through a bottom of the positioning groove 440. A portion of the second connection sheet 430 is located in the positioning groove 440 and connected to the second end pole 412. The through hole 130 is constructed at the bottom of the positioning groove 440. In this way, a relative position between the second connection sheet 430 and the fixed holder 100 is more reliable, so that the electrical connection reliability between the second connection sheet 430 and the second end pole 412 can be ensured.

Other components and operations of the voltage collection structure 1 according to the embodiments of the present disclosure and the battery module 3 having the voltage collection structure are known to a person of ordinary skill in the art, and are not described herein in detail.

In the description of this specification, the description of the reference terms such as "an embodiment", "some embodiments", "exemplary embodiments", "an example", "a specific example", or "some examples" means that the specific features, structures, materials or characteristics described with reference to the embodiment or example are included in at least one embodiment or example of the present disclosure. In this specification, schematic description of the foregoing terms does not necessarily refer to the same embodiment or example.

Although the embodiments of the present disclosure have been shown and described, a person of ordinary skill in the art may understand that various changes, modifications, replacements and variations may be made to the embodiments without departing from the principle and spirit of the present disclosure, and the scope of the present disclosure is defined by the claims and equivalents thereof.

## Claims

1. A voltage collection structure (1), comprising:
a fixed holder (100), the fixed holder being configured to be connected to a plurality of battery cores (2);
a circuit board (200), the circuit board being installed on a side of the fixed holder that is away from the plurality of battery cores; and
a plurality of voltage collection sheets (300), the plurality of voltage collection sheets being installed on the circuit board and connected to the plurality of battery cores, each voltage collection sheet comprising a buffer segment (310), and at least a portion of the buffer segment protruding in a direction that faces away from the battery core, causing the voltage collection sheet to have a displacement allowance in a direction that is close to the battery core, wherein a maximum protruding distance of the buffer segment ranges from 0.5 mm to 20 mm.

2. The voltage collection structure according to claim 1, wherein a dimension of the at least portion of the buffer segment in a width direction of the voltage collection sheet ranges from 2 mm to 20 mm, and a dimension in an extension direction of the voltage collection sheet ranges from 0.5 mm to 20 mm.

3. The voltage collection structure according to claim 1, wherein each of the plurality of voltage collection sheets further comprises:
a circuit board connection segment (320), the circuit board connection segment being connected to the circuit board and an end of the buffer segment, and
a battery core connection segment (330), the battery core connection segment being configured to be connected to the battery core and another end of the buffer segment, the battery core connection segment and the circuit board connection segment being parallel and located in different planes, and a portion of the buffer segment being located on a side of the circuit board connection segment that faces away from the battery core connection segment in a thickness direction of the voltage collection sheet, causing the battery core connection segment to have a displacement allowance in the direction that is close to the battery core, wherein a maximum distance between the portion of the buffer segment and the circuit board connection segment in the thickness direction of the voltage collection sheet ranges from 0.5 mm to 20 mm.

4. The voltage collection structure according to claim 3, wherein the buffer segment comprises:
a first subsegment (311), wherein a first end (311a) of the first subsegment is connected to an end of the circuit board connection segment that is adjacent to the battery core connection segment, and the first subsegment extends in a direction away from the battery core connection segment in a thickness direction of the circuit board connection segment;
a second subsegment (312), wherein a first end (312a) of the second subsegment is connected to an end of the battery core connection segment that is adjacent to the circuit board connection segment, and the second subsegment extends in a direction close to the circuit board connection segment in a thickness direction of the battery core connection segment; and
a third subsegment (313), wherein two ends of the third subsegment are connected to a second end (311b) of the first subsegment and a second end (312b) of the second subsegment respectively.

5. The voltage collection structure according to claim 4, wherein the first subsegment and the second subsegment are parallel and perpendicular to the third subsegment, and the third subsegment, the battery core connection segment, and the circuit board connection segment are parallel.

6. The voltage collection structure according to claim 4, wherein the third subsegment is bent and connected to the first subsegment and the second subsegment respectively.

7. The voltage collection structure according to claim 1, wherein a first buckle (110) and a second buckle (120) are arranged on a side of the fixed holder that faces away from the battery core, and the first buckle is configured to be clamped onto a side of the circuit board that faces away from the battery core; and
a plurality of through holes (130) are provided on the fixed holder along a thickness direction thereof, poles of the plurality of battery cores are respectively inserted into the plurality of through holes, and a portion of each pole that passes through the through hole is clamped by the second buckle.

8. A battery module (3), comprising:
a plurality of battery cores (2); and
the voltage collection structure (1) according to any one of claims 1 to 7.

9. The battery module according to claim 8, wherein each battery core comprises a conductive housing (400) and a battery core body (500) that is arranged in the conductive housing, the battery core has a first end and second end that are opposite to each other, the battery core body has a first end pole (411) that is arranged on the first end and a second end pole (412) that is arranged on the second end, and the first end pole is connected to the conductive housing; and
the voltage collection structure is arranged on the second end, a part of the plurality of voltage collection sheets are connected to the second end poles, and another part of the plurality of voltage collection sheets are connected to the conductive housings.

10. The battery module according to claim 9, further comprising:
at least one first connection sheet (420), each first connection sheet connecting first end poles of two adjacent battery cores, wherein the plurality of battery cores are arranged along a thickness direction of the battery cores, and polarities of first end poles of adjacent battery cores are opposite and polarities of second end poles thereof are opposite; and
at least one second connection sheet (430), each second connection sheet connecting second end poles of two adjacent battery cores, and the plurality of battery cores being connected in series through the at least one first connection sheet and the at least one second connection sheet, wherein the second connection sheet is located between the fixed holder and the circuit board, and the part of the plurality of voltage collection sheets are connected to the second end poles through the second connection sheet.

11. The battery module according to claim 10, wherein a plurality of positioning grooves (440) are provided on a side of the fixed holder that faces away from the battery core, the second end pole passes through the positioning groove, and a portion of the second connection sheet is located in the positioning groove and connected to the second end pole.
